# EUROPÄISCHE PATENTSCHRIFT

(11) **EP 0 328 080 B1**
(45) Veröffentlichungstag und Bekanntmachung des Hinweises auf die Patenterteilung: **15.11.1995**
(21) Anmeldenummer: 89102169.3
(22) Anmeldetag: 08.02.1989
(51) Int. Cl.: A01D 34/52

(54) **Walzenmäher**
Spindle mower
Faucheuse hélicoidale

(30) Priorität: 08.02.1988 DE 3803725; 06.06.1988 DE 3819227; 30.06.1988 DE 3822161
(43) Veröffentlichungstag der Anmeldung: 16.08.1989
(73) Patentinhaber: Wieneke, Franz, Prof. Dr.-Ing., D-37120 Bovenden (DE)
(72) Erfinder: Wieneke, Franz, Prof. Dr.-Ing., D-37120 Bovenden (DE)
(74) Vertreter: Münich, Wilhelm, Dr.

(56) Entgegenhaltungen:
- DE-A- 1 757 631
- DE-A- 3 635 925
- DE-B- 1 147 794
- DE-C- 85 193
- FR-A- 2 557 420
- GB-A- 742 595
- NL-A- 6 515 224
- US-A- 2 904 118
- US-A- 3 073 100
- US-A- 4 109 447
- US-A- 4 719 743

## Beschreibung

### Technisches Gebiet

Die Erfindung bezieht sich auf einen Walzenmäher mit einer drehbaren Walze gemäß dem Oberbegriff der Patentansprüche 1 bzw. 2 (US-A-4 109 447). Gegenstand der Erfindung ist damit die Weiterbildung der bekannten Schneckenmäher, Spindelmäher und Schlegelmäher.

Walzenmäher der oben angegebenen Art werden beispielsweise als Anbau-Mäher für Traktoren oder als selbstfahrende oder von Hand geschobene Mäher für Gärten, Golfplätze, Felder oder dgl. eingesetzt.

### Stand der Technik

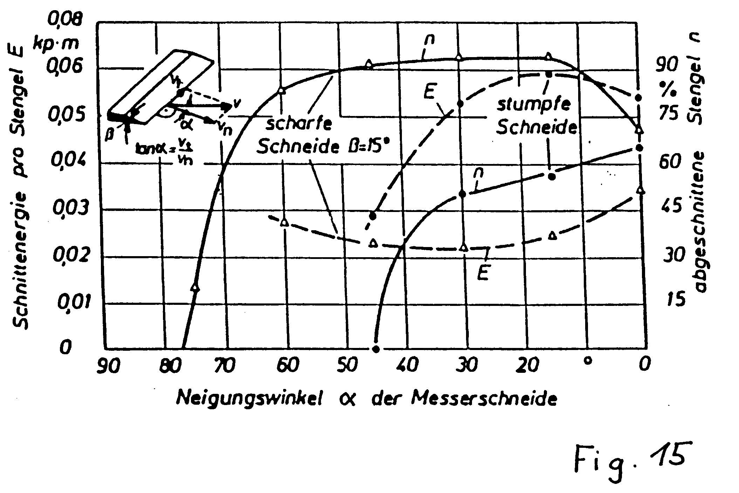

Die bekannten Walzenmäher haben eine Reihe von Nachteilen, die im folgenden erläutert werden sollen:
Es ist bekannt, daß bei Mähwerkzeugen, die um eine horizontale Achse umlaufen, mit zunehmendem Neigungswinkel der Schneide zur Drehachse, der Anteil nicht oder unvollständig geschnittener Halme zunächst in geringem Maße, dann verstärkt zunimmt. Dies ist beispielhaft in Fig. 15 dargestellt, die u.a. die Abhängigkeit der zum Schneiden erforderlichen Schnittenergie von dem Neigungswinkel α der Messerschneide zeigt. Ein stärkerer Abfall der Schnittgüte tritt bei stumpfer Schneide schon bei relativ geringen Neigungswinkel von ca 30° auf.

Dies ist die Ursache, daß ein Schneckenmäher mit geringer Steigung α der schneckenförmigen glatten Schneide und damit großem Neigungswinkel ein schlechtes Mähbild hinterläßt; die Schnecke schiebt die zu mähenden Halme eher zur Seite als sie Halme schneidet.

Aus Figur 15 ist ferner zu sehen, daß mit ansteigendem Neigungswinkel α die notwendige Schnittenergie zunächst abnimmt, d.h. es kommt zunehmend zu einem ziehenden Schnitt mit geringerem Leistungsbedarf.

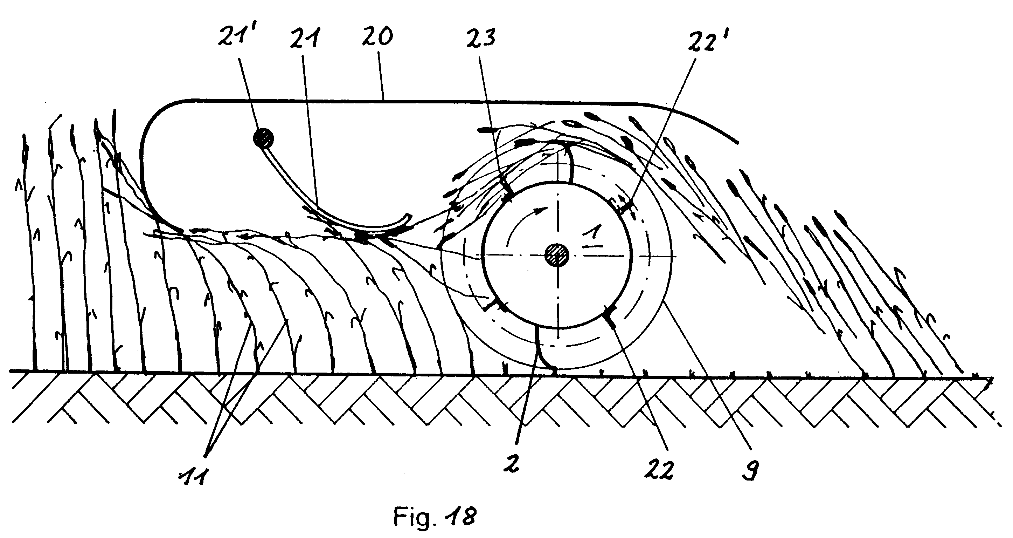

Eine Mähschnecke mit großer Steigung dagegen arbeitet mit einem geringerem Neigungswinkel α, vergleichbar mit einem Schlegelmäher oder Schlegelfeldhächsler, dessen Schlegel etwa senkrecht auf die Halme treffen und diese abschlagen. Entsprechend der mit der Fahrgeschwindigkeit fortschreitenden zykloidenförmigen Mähbahn wird das stehende Halmgut in kommaförmigen Sektionen a₁; a₂;.... abgeschlagen (Figur 17). Das von oben nach unten erfolgende Abschlagen des stehenden Halmgutes setzt sich entsprechend dem Wirksamwerden der Zykloidenbahnen der Mähwerkzeuge fort, bis die Stoppelhöhe erreicht ist; das Halmgut wird so in seiner Länge mehrfach in Stücke geschnitten, wobei ein Teil soweit verkürzt wird, daß er in die Stoppel fällt und nicht mehr aufgenommen werden kann. Das mehrfache Abtrennen des stehenden Halmgutes erfordert zudem einen entsprechenden Leistungsbedarf. Zur Verkürzung des Halmgutes kommt es auch, wenn das gemähte Gut nicht direkt nach hinten ausgeworfen wird, sondern gegen die noch stehenden Halme. Es bildet sich dann eine Rolle gemähten Gutes vor dem Rotor, die von der Mähschnecke teils abgefräst und abgetragen, andererseits aber durch das neu gemähte Gut vergrößert wird. Die Gutrolle vor dem Schneidrotor kann darüberhinaus das noch zu mähende feinere Blattgut soweit niederdrücken, daß es dann nur teilweise von den Mähwerkzeugen erfaßt wird; es entsteht eine unerwünscht hohe Stoppel.

Nach dem Vorstehenden nimmt also bei einer glatten Schneidkante mit abnehmender Schneckensteigung der Leistungsbedarf und leider aber auch die Schnittgüte (Gleichmäßigkeit der Stoppelhöhe) ab.

Bei einer gezahnten Schnecke ist theoretisch die Neigung der schneidenden Zahnflanke für die Schnittgüte und den Leistungsbedarf bestimmend, ebenso für die Verkürzung der natürlichen Halmlänge. Die Schneckensteigung ist aber auch für die Schwadbildung oder generell für den Axialtransport des gemähten Gutes durch die Mähschnecke selbst von Bedeutung. Wie in der deutschen Offenlegungsschrift DE 36 35 925 A1 dargelegt ist, darf der Steigungswinkel der Mähschnecke nicht den Tangens des Reibungswinkels des gemähten Gutes überschreiten (Gleitbedingung).

In der amerikanischen Patentschrift US-A-4 109 447 wird ebenso ausgeführt, daß der Steigungswinkel der Mähschnecke möglichst einen Winkel von ca. 15° betragen sollte, um den Energieintrag zum Schneiden der Halme möglichst gering zu halten
Weiterhin ist von besonderem Nachteil, daß die über die Mähbreite durchlaufenden Schneiden von Walzenmähern relativ rasch abstumpfen, da Steine an diesen entlang gleiten; offenbar werden Steine nicht schnell genug nach hinten durchgelassen. Gezahnte Schneiden, die gegenüber glatten Schneiden sauberer mähen, verbiegen leicht unter dem Aufprall von Steinen. In den Zähnen bleibt - wie bereits ausgeführt - zudem leicht Halmgut hängen.

An einer zur Drehachse geneigten Randzone der Schneidelemente kann es darüberhinaus leicht zum Anhaften von Erde kommen, wodurch die Schneidfähigkeit herabgesetzt wird.

### Darstellung der Erfindung

Aufgabe der Erfindung ist es, die Schneiden von Walzen so auszubilden, daß einerseits Fremdkörper leicht durchgelassen werden, andererseits die Schneiden mit hoher Standfestigkeit und Schärfe arbeiten und das Anhaften von Erde vermieden wird. Dabei soll möglichst ein leichtes Nachschärfen der Schneidelemente in der Maschine möglich sein. Insbesondere soll erfindungsgemäß bei einem Schnekkenmäher mit gezahnter Schneide bei sauber geschnittener Stoppel die Verkürzung der natürlichen Halmlänge beim Mähen möglichst gering gehalten werden.

Eine erfindungsgemäße Lösung dieser Ausgabe ist mit ihren Weiterbildungen in den Patentansprüchen gekennzeichnet.

Der bessere Schnitt, d.h. die sauber geschnittene Stoppel bei möglichst geringer Verkürzung der natürlichen Halmlänge wird erfindungsgemäß dadurch erreicht, daß bei einer gezahnten Schneide die Schnecke mit einer solchen Steigung ausgelegt ist, daß sie zunächst die Halme im oberen Bereich zur Seite biegt und erst im unteren Bereich, nämlich der gewünschten Stoppelhöhe, diese mit geneigten Zahnflanken abtrennt. Der Neigungswinkel der Zahnflanken ist so gewählt, daß die Halme in Stoppelhöhe an der Schneide nicht abrutschen können.

Hierzu ist die Steigung (α) der schräg oder schneckenförmig angestellten Schneidelemente in bekannter Weise kleiner als 30° (siehe auch US-A-41 09 447). Erfindungsgemäß sind die Schneiden der Zähne längs der effektiven Schnittlinie gegenüber der Drehachse entgegen der Drehrichtung um einen Winkel (β) von größer als 20° geneigt, während der Winkel Γ weniger als 30° beträgt.

Überraschenderweise führt nämlich eine Mähschnecke mit einer Verzahnung, deren effektive Schnittlinien nur mit einem geringem Winkel β geneigt ist und ein seitliches Ausweichen der Halme nicht zuläßt, in Kombination mit einer geringen Neigung α der Schnecke, nicht zu einem Abschlagen der Halme im oberen Halmbereich. Offenbar wirken dann die Zannspitzen in ihrer Folge am äußeren Umfang der Schnecke insgesamt wie eine quasi durchlaufende Schneide, die das Halmgut im oberen Halmbereich also bei relativ geringem Biegewiderstand, nicht in die Zahnlücken eintreten läßt. Erst im bodennahen Bereich mit wachsendem Biegewiderstand der Halme ist dies der Fall und der Schnitt erfolgt. Der zu wählende Steigungswinkel α der Schnecke und der Neigungswinkel β der schneidenden Zahnflanke werden durch die Eigenschaften des zu mähenden Gutes bestimmt.

Für Halmgut kann festgestellt werden, daß der Steigungswinkel α einer Schnecke mit gezahnter Schneide unter dem Reibungswinkel µ liegen muß; bei einem Reibungswert von µ = 0,5 für frisches Gut ergibt sich ein Reibungswinkel unter 30°. Damit ist gleichzeitig dann auch ein axialer Transport des gemähten Gutes, wie er zur Schwadbildung notwendig ist, sichergestellt. Der Neigungswinkel β der wirksamen Zahnflanken sollte dann größer als 20° sein, damit die Blätter und Halmgutfasern nicht hängen bleiben und so die Zähne ihre Schneidfähigkeit nicht verlieren.

Bei einer weiteren Lösung der erfindungsgemäß gestellten Aufgabe wird ein gattungsgemäßer Walzenmäher dadurch weitergebildet, daß die zur Drehachse geneigte Randzone eine wellenartige Profilierung mit etwa kreissegmentförmigem Querschnitt trägt. Diese Lösung mit einer durchgehenden Schnecke ist insbesondere für das Mähen auf einem Untergrund, der wenig Steine aufweist, wie beispielsweise das "Green" von Golfplätzen geeignet.

Ferner ist erfindungsgemäß vorgesehen, daß die Randzone der durchgehenden Schneide bzw. der einzelnen Schneidelemente mit der Drehachse einen Winkel einschließt.

Weiterbildungen der Erfindung sind in den Unteransprüchen angegeben.

Für die Arbeit auf sehr steinigen Wiesen können die einzelnen Schneidsegmente pendelnd aufgehängt werden (Anspruch 4).

Ein besseres Durchlassen von Steinen wird auch durch die Weiterbildung gemäß Anspruch 5 erreicht, gemäß der schräg zur Fahrtrichtung angestellte Teller, deren Ränder als Schneide ausgebildet sind, vorgesehen sind.

Die Standzeit der Schneide bei guter Schnittqualität wird durch eine besondere Profilierung der Schneide verbessert (Ansprüche 7-10). In die äußere Randzone eines schneckenförmigen Segmentes oder in den Rand eines Tellers wird eine Verzahlung eingeprägt oder eingeschnitten. Die wirdsame Schnittlinie des einzelnen Zahnes ist zur Drehachse der Walze geneigt, so daß Halme oder Blätter nicht hängen bleiben können. In Bezug zur Umfangsrichtung ist der Zahn angespitzt, was zu einem leichten und sauberen Schnitt führt. Der Verbund der einzelnen Zähne trägt zur Standfestigkeit bei.

Im Anspruch 12 ist eine Weiterbildung gekennzeichnet, die Mehrfachschnitt zusätzlich verhindert: Hierbei ist bis nahe vor dem Schneckenrotor eine leichte Schürze angeordnet, die sich auf das stehende Gut legt, es in Fahrtrichtung neigt und zudem das Abwerden des gemähten Gutes nach vorn unterbindet. In der Mähtechnik sind tiefheruntergezogene, feste Blechnasen oder Rollen bekannt, die das stehende Gut nach vorne neigen. Sie passen sich der Bestanddichte nicht an, so daß gemähte Halme unter den Auflageflächen dieser Niederhalter durch die Mähwerkzeuge herausgezogen werden müssen; dabei kommt es zu einem teilweisen Nachschneiden der bereits gemähten Halme. Die bekannten Schutztücher von Trommel- und Scheibenmähern erfüllen diese Aufgabe nicht, da bei diesen Mähprinzipien das Problem des Mehrfachschnittes nicht besteht. Eine aktive Förderung des gemähten Gutes aus dem Schnittbereich läßt sich auch durch eine angetriebene Rolle erreichen, die direkt vor dem Schneckenrotor angeordnet ist (Anspruch 13 bzw. 14).

Zur Unterstützung der raschen Förderung des Gutes können auf der Trommel bzw. Walze des Schneckenmähers längs laufende Leisten angebracht sein (Anspruch 15). Ferner ist vorgesehen, daß durch eine schon vor der Mitte des Schnekkenmähers ansteigende Haube, sich das gemähte Gut schon im vorderen Bereich von der Mähtrommel löst (Anspruch 16); der geringe Berührungssektor mit der Mähschnecke mindert die Gefahr des Mehrfachschnittes. Überdies ergibt sich damit die Möglichkeit eines Wendeeffektes im Haubendom, so daß dann, wenn es gewünscht wird, der Halmgutstrom mit den Halmenden nach oben und auch wirr abgelegt wird und schneller trocknet.

Insbesondere für das Mähen der häuslichen Rasenflächen oder von Golfplätzen, bei dem ein sehr sauberer und möglichst glatter Schnitt gewünscht wird, ist mit geschärften Schneiden zu arbeiten, die wiederum eher eine geringe Schneckensteigung zulassen (vgl. Figur 15). Daraus resultiert, daß die Schneide der Schnecke leicht austauschbar sein sollte. Gemäß Anspruch 18 ist deshalb vorgesehen, daß die Schneide als Band auf einem schneckenförmigen Tragkörper aufliegend befestigt ist. Dieses Schneidenband schließt zur Achse typischerweise einen Winkel von Γ' ≈ 60° ein, so daß sich keine Erde und Halmgutreste aufbauen können. In der Abwicklung stellt dieses Band damit einen Kreisring oder einen Abschnitt von diesem dar, dessen Radien von der Schneckensteigung bestimmt sind.

In den Ansprüchen 18f ist eine einfache Lösung für eine derartige Schnecke angegeben. Hierzu besitzt der das Band tragende schneckenförmige Grundkörper eine zylindrische streifenförmige Mantelfläche zur Bandauflage. Wickelt man nämlich einen geraden, elastischen Bandstreifen mit gleicher Steigung auf einem Zylinder auf, so liegt er "satt", d.h. ohne Spaltbildung an der Seite auf.

Das Band stützt sich dabei gegen einen Kragen ab und kann so die axiale Schnittkraftkomponente aufnehmen.

Zur Schnittseite ist der das Band tragende Schneckensteg des Grundkörpers zur Achse mit ungefähr 60° angestellt, damit Halm- und Blatteile sowie Erde abfließen können.

Bei verzahnter Schneide des Bandes mündet der geneigte Schneckensteg am Zahngrund aus, so daß nur die Zähne überstehen; diese können gegenüber einer Achsparallelen leicht aufgerichtet (etwa 20°) sein, so daß die Zähne selbst durch die an sich bekannte Schleifmethode - bei laufendem Rotor wird ein Schleifstein hin- und herbewegt - geschärft werden können.

Gemäß Anspruch 23 ist es natürlich auch bei einer anderen Ausbildung der Schneidelemente möglich, die Schneide bei laufendem Rotor durch Zustellen einer Schleifleiste (Korundleiste) oder durch einen hin- und herbewegten Stein zu schärfen (Anspruch 23).

### Kurze Beschreibung der Zeichnung

Die Erfindung wird nachstehend anhand von Ausführungsbeispielen unter Bezugnahme auf die Zeichnung näher beschrieben, in der zeigen:
- Fig. 1: ein erstes Ausführungsbeispiel der Erfindung, bei dem eine Mehrzahl von getrennten Schneidelementen vorgesehen ist,
- Fig. 2: eine Seitenansicht eines Walzenmähers mit pendelnd aufgehängten Werkzeugen,
- Fig. 3: einen Schnitt bei A-B in Fig. 2,
- Fig. 4: eine Ansicht in Richtung des Pfeils C in Fig. 3,
- Fig. 5: eine Seitenansicht eines Ausführungsbeispiels, bei dem die Schneidelemente aus Tellern bestehen,
- Fig. 6: eine Ansicht in Richtung des Pfeils D in Fig. 5,
- Fig. 7: ein Ausführungsbeispiel mit einer Abstützung,
- Fig. 8 bis 10: vorteilhafte Zahnprofilierungen der Schneiden,
- Fig. 11: eine weitere Ausführungsform der Zahnprofilierung,
- Fig. 12 bis 14: ein Ausführungsbeispiel mit durchlaufenden Schneiden,
- Fig. 15: die Abhängigkeit der Schnittenergie bzw. des "Schnitterfolgs" von der Schneckensteigung α,
- Fig. 16: die im folgenden verwendeten Größen,
- Fig. 17: die sich ergebende "Mäh-Bahn",
- Fig. 18: ein weiteres Ausführungsbeispiel der Erfindung,
- Fig. 19: eine Modifikation dieses Ausführungsbeispiels,
- Fig. 20: eine weitere Modifikation, und
- Fig. 21 bis 23: Ausführungsformen für den Mährotor.

### Beschreibung von Ausführungsbeispielen

In der folgenden Beschreibung bezeichnen gleiche Bezugszeichen durchgängig gleiche Elemente, so daß in der Beschreibung gegebenenfalls auf eine erneute Vorstellung bereits beschriebener Elemente verzichtet wird.

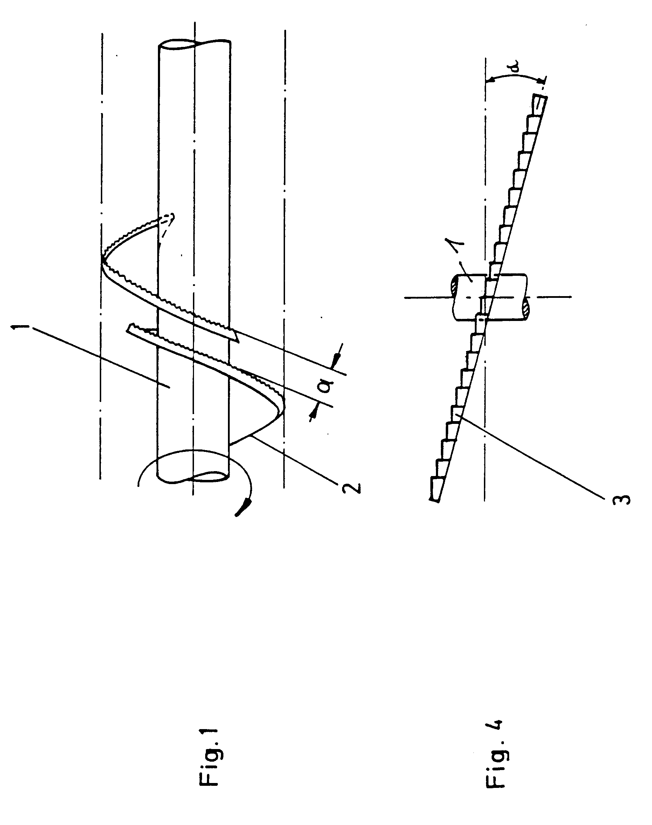

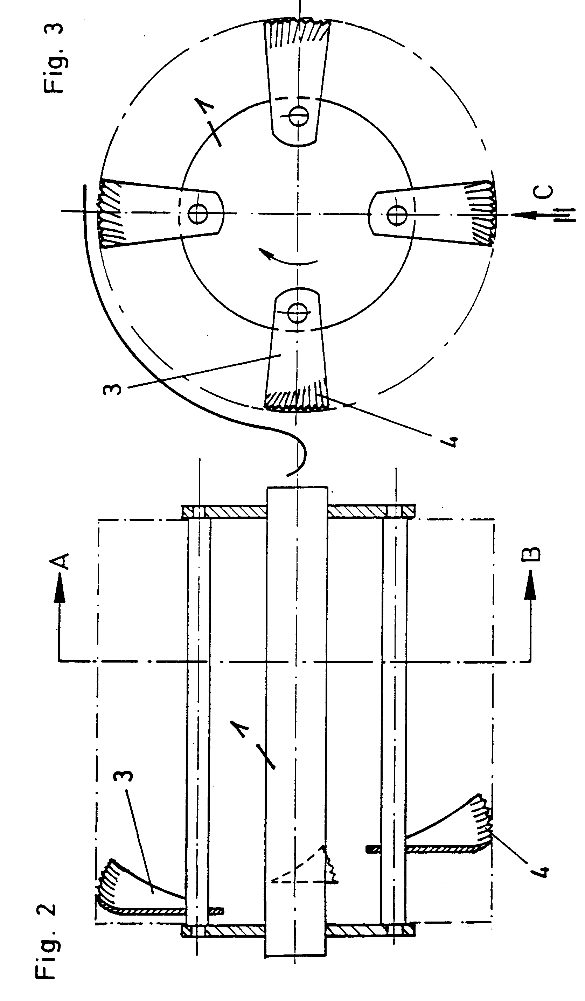

Fig. 1 zeigt eine Seitenansicht eines erfindungsgemäßen Walzenmähers, der auf einer Welle bzw. einem einem Mantel (1) schneckenförmige Schneidsegmente (2) trägt. Zwischen den einzelnen Schneidsegmenten (2), die sich, in Fahrtrichtung gesehen, überlappen, besteht eine Lücke (a), durch die Steine ohne einen langen seitlichen Transport vor der Schneide hindurch treten können.

Die Figuren 2 bis 4 zeigen ein weiteres Ausführungsbeispiel eines Walzenmähers, der eine Walze bzw. einen Rotor (1) mit pendelnd aufgehängten, schneckenförmigen Schneidsektionen (3) aufweist, deren Randzone (4) verzahnt und zur Achsrichtung um den Winkel α geneigt ist. Der Steigungswinkel α dieser Schneidelemente wird vorteilhafterweise so gewählt, daß das gemähte Gut am geneigten Element (3) abgleitet und damit axial gefördert wird. Damit kann die Bildung eines Mähschwads erfolgen, wenn die Steigung der Schneidsektonen von beiden Seiten zur Mitte führt.

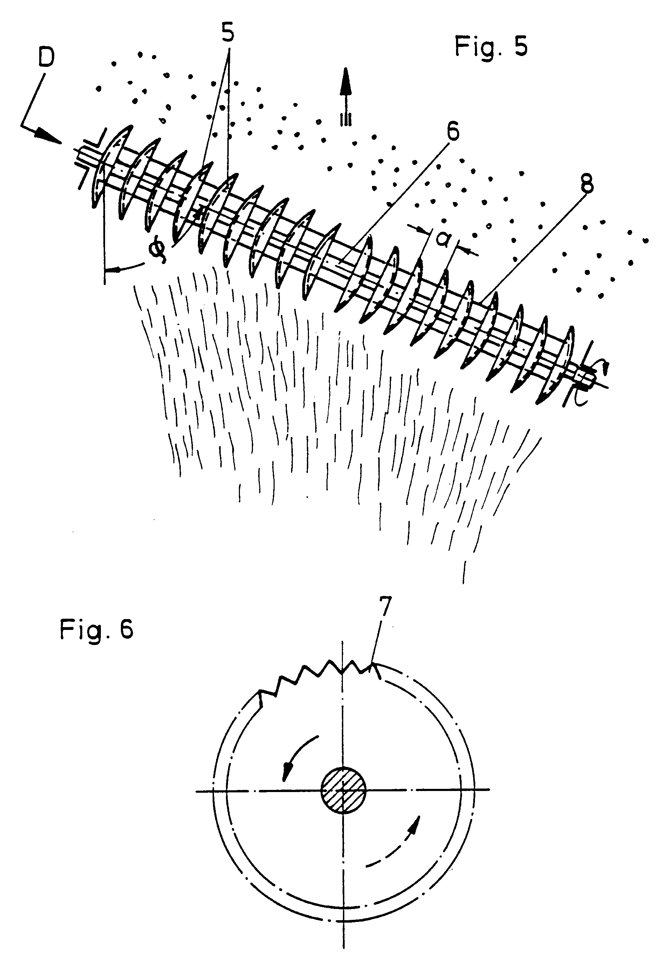

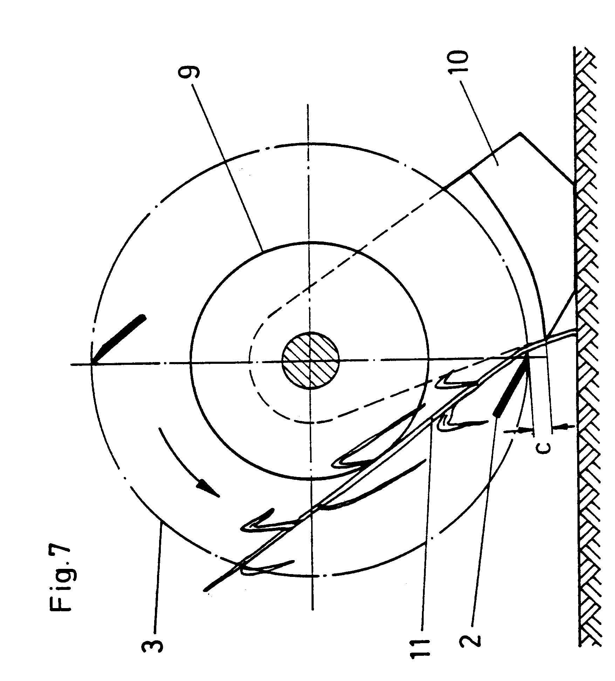

Die Fig. 5 und 6 zeigen ein Ausführungsbeispiel der Erfindung, bei dem die Schneidelement aus Tellern (5) bestehen, die von einer Welle (6) aufgenommen werden. Die Drehachse (6′) der Welle (6) ist zur Fahrtrichtung um einen Winkel φ angestellt. Der Rand der Scheiben ist glatt und angeschärft oder tragt eine Verzahnung (7) (s. Fig. 6), die eingeschnitten oder eingeprägt ist. Ein solcher Schneidrotor kann unterschlächtig oder über Kopf mähen. Es ist vorteilhaft, den Raum zwischen den Scheiben mit Rohrstücken (8) auszufüllen, die einen solchen Durchmesser besitzen, daß ihr Umfang etwa der mittleren Halmlänge des zu mähenden Gutes entspricht; so läßt sich das Wickeln um den Rotor weitgehend vermeiden.

Fig. 7 zeigt ein Ausführungsbeispiel, bei dem der durch den Schneidkreis (9) nur pauschal dargestellte Mährotor zum Boden hin durch eine Gleitschiene (10) abgestützt ist. Für den Fall des unterschlächtigen Mähens reicht die vordere Spitze der Gleitschiene (10) bis in den Bereich der Achsmitte, so daß die durchlaufende vordere Kante den Halm (11), der im freien Schnitt im Abstand c vom Rotor abgeschlagen wird, abstützt.

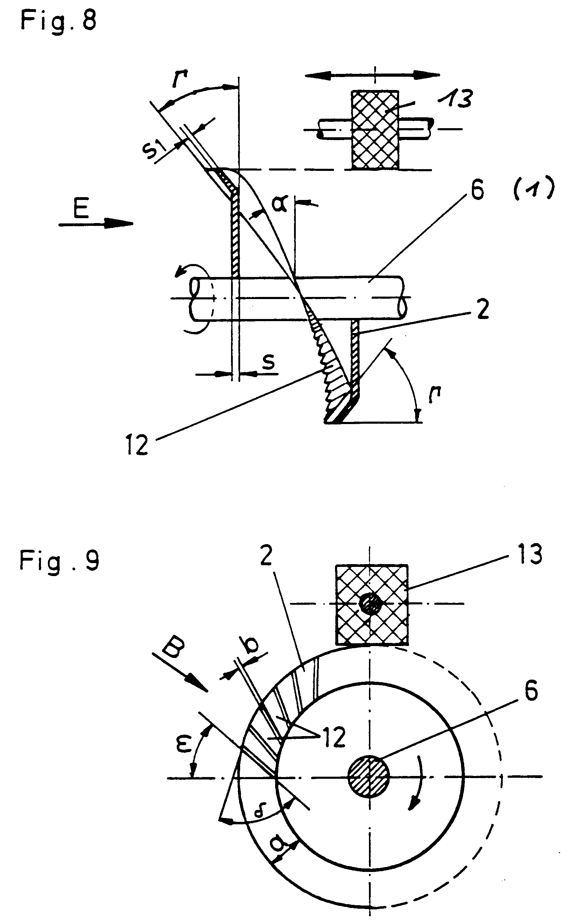

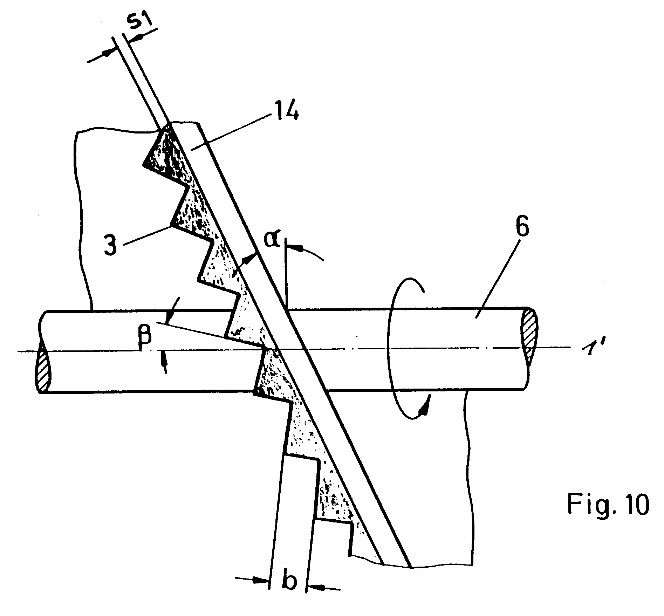

Fig. 8 zeigt in einer Seitenansicht, Fig. 9 in einer Ansicht in Richtung des Pfeils E in Fig. 8 und Fig. 10 in einer vergrößerten Darstellung vorteilhafte Zahnprofilierungen der Schneiden. Sie verbinden eine hohe Standfestigkeit der Schneidkanten mit dem leichten Schärfen der Schneiden in der Maschine.

Figur 8 zeigt die Hälfte eines Schneckenwendels (2), der gegenüber der Welle (1) einen Steigungswinkel α aufweist. Die Randzone (a) der Schnecke ist um den Winkel Γ gegenüber der Senkrechten zur Welle (6) einer nicht näher dargestellten Walze (1) geneigt. Der Winkel Γ ist mit ca 30° so klein gehalten, daß Erde radial entlang gleitet und sich nicht aufbaut. Das Schneckenelement (3) besitzt eine Blechdicke s. In die Randzone (a) ist eine Riffelung (12) derart eingeschnitten oder eingeprägt, daß eine Blechdicke (s) der Randzone (a) durchgehend erhalten bleibt, was zu deren Steifigkeit beiträgt. Vorzugsweise ist die Riffelung gegenüber einem radialen Fahrstrahl um den Winkel ε (Fig. 9) und gegenüber der Achse (6) um den Winkel β geneigt (Fig. 10), so daß gemähtes Gut seitlich abrutschen kann. Damit ergibt sich ein Schnittwinkel δ der Breite der aktiven äußeren Schneidlinie (b) des einzelnen Zahnes (12) kleiner als 90°; mit wachsendem Winkel ε wird der Winkel δ kleiner; der Einzelzahn wird schärfer, was für das Mähen feiner Blätter erwünscht ist. Für ε = 0° wird δ = 90°, wenn der Winkel β klein bleibt; der Zahn ist dann gegenüber dem Auftreffen auf Steinen weniger empfindlich, aber auch weniger scharf.

Es ist vorgesehen, daß die Riffelfläche mit Nitraten bedampft oder einsatzgehärtet ist. Damit verschleißt der ungehärtete Bereich der äußeren Mantelfläche schneller; es tritt so eine Selbstschärfung der Verzahnung ein.

Wahlweise kann ein Nach-Schleifen auch durch einen achsparallel hin und her bewegten Stein (13) oder das Anlegen einer Korundleiste erfolgen. Die Außenfläche (14) (in Fig. 10 dunkel angelegt) wird abgetragen, wobei die Zahnform erhalten bleibt. Die Außenfläche (14) des Schneidsegmentes (3) stellt so einen Teil der Mantelfäche einer Walze dar, die durch das Schleifen abgetragen wird.

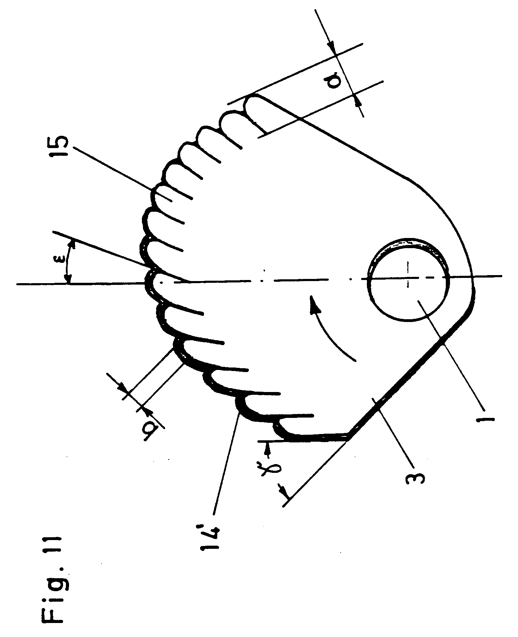

Eine Alternative zur Verzahnung der geneigten Randzone (a) stellt eine wellige Profilierung (15) dar, wie sie Fig. 11 zeigt. Durch die Neigung der runden Profilwelle um den Winkel gegenüber der radialen Richtung, ergibt ein angespitzter Bereich b′ als Schneidlinier. Die äußere Fläche (14′) liegt dabei wieder auf einem Walzenmantel und ist so bei Rotation des Schneidelements (3) durch ein axiales Hin- und Herbewegen eines Schleifsteins in einfacher Weise zu schärfen. Ansonsten haben in Fig. 11 die Bezugszeichen die gleiche Bedeutung wie in den Fig. 8 bis 10.

Die vorstehend beschriebenen Verzahnungslösungen in Verbindung mit der Schleifmöglichkeit läßt sich auch für große Steigungswinkel α von durchlaufenden Schneiden, wie sie bei Spindelmähern verwendet werden, in vorteilhafter Weise anwenden.

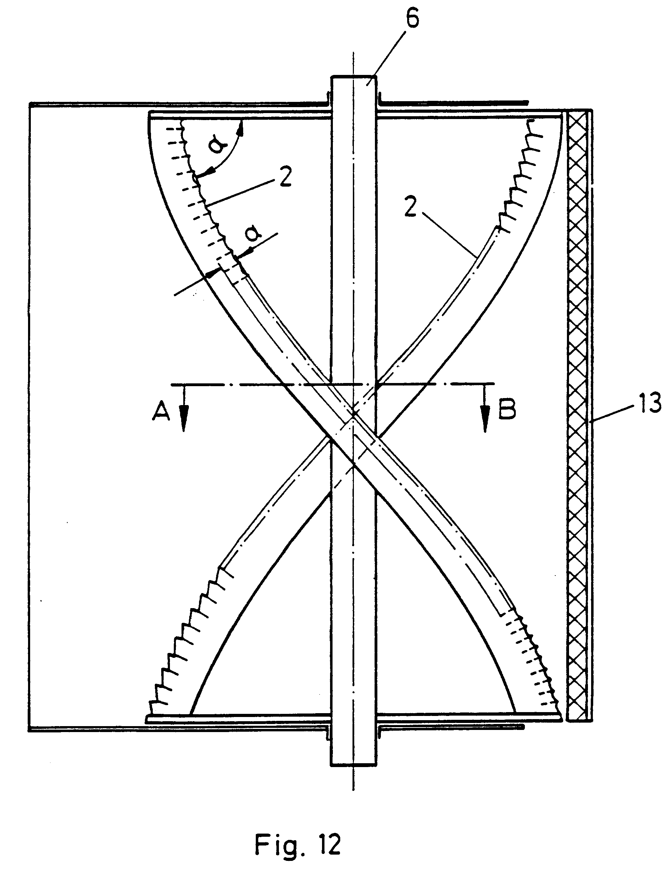

Fig. 12 zeigt eine Seitenansicht eines Spindelmähers mit durchlaufenden Schneiden (2), die auf einer nicht näher dargestellten Trommel mit einer Achse (6) angeordnet sind.

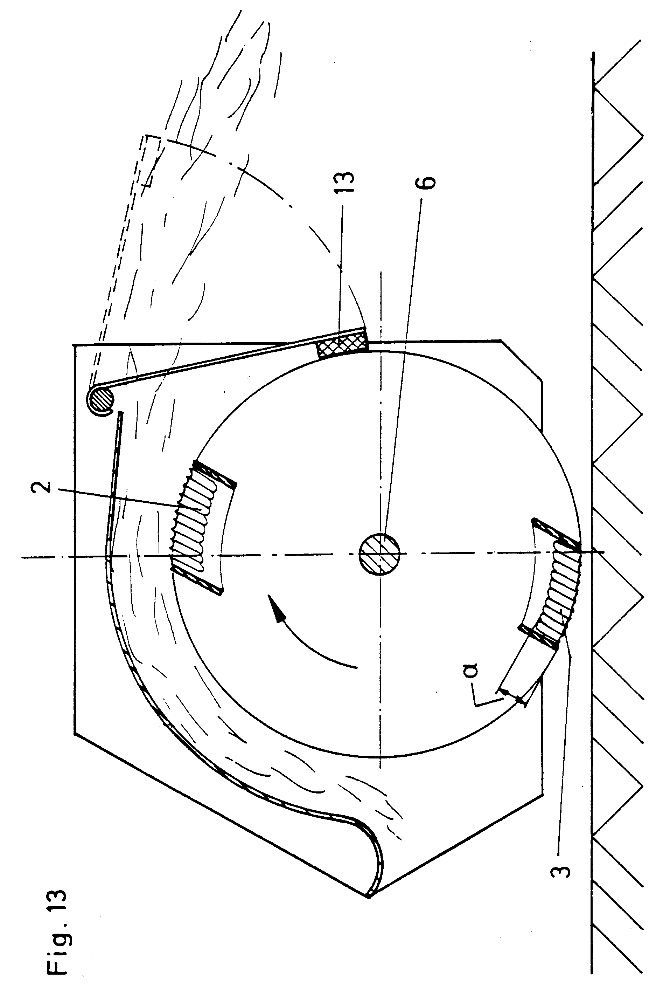

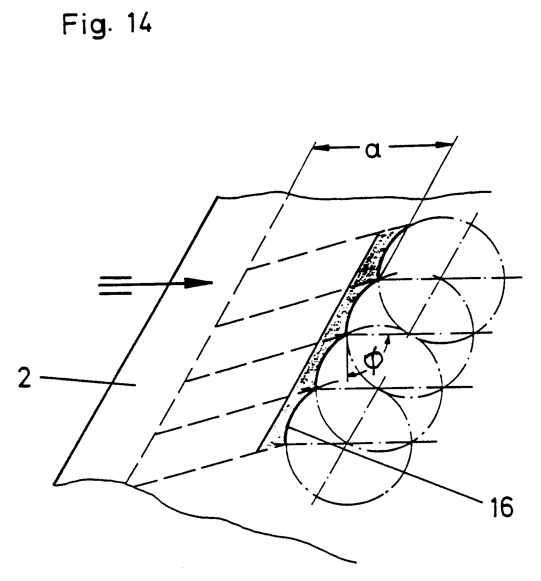

Fig. 13 zeigt einen Schnitt bei A-B in Fig. 12. In Figur 14 ist die Folge der Rundungen (16) der Profilierung der Zone a der Schneidleiste (3) so gewählt, daß sie bei dem vorgegebenen Steigungswinkel α mit dem Winkel φ ≧ 90° gegenüber der Bewegungsrichtung ausläuft; das gemähte Gut wird so aus der Rundung (16) seitlich herausgedrückt; an den Rundungen bleibt kein Halmgut hängen.

Im folgenden sollen Ausführungsbeispiele erläutert werden, bei denen die Schnecke in besonderer, erfindungsgemäßer Weise gestaltet ist. Diese Ausgestaltung kann sowohl bei Walzenmähern mit einer Vielzahl von getrennten, sich überlappenden Schneidelementen als auch bei Mähern mit einer durchgehenden Schneide Verwendung finden.

Fig. 15 zeigt für bekannte Mähwerke die zum Schneiden erforderlichen Schnittenergie (gestrichelte Linie) bzw. den Prozentsatz der abgeschnittenen Stengel bzw. Halme (durchgezogene Linie) als Funktion des Neigungswinkels α der Messerschneide für eine scharfe Schneide und eine stumpfe Schneide (nach Feller). Fig. 15 ist zu entnehmen, daß ein stärkerer Abfall der Schnittgüte bei stumpfer Schneide schon bei relativ geringen Neigungswinkel von ca 30° auftritt.

Aus Figur 15 ist ferner zu sehen, daß mit ansteigendem Neigungswinkel α die notwendige Schnittenergie zunächst abnimmt, d.h. es kommt zunehmend zu einem ziehenden Schnitt mit geringerem Leistungsbedarf.

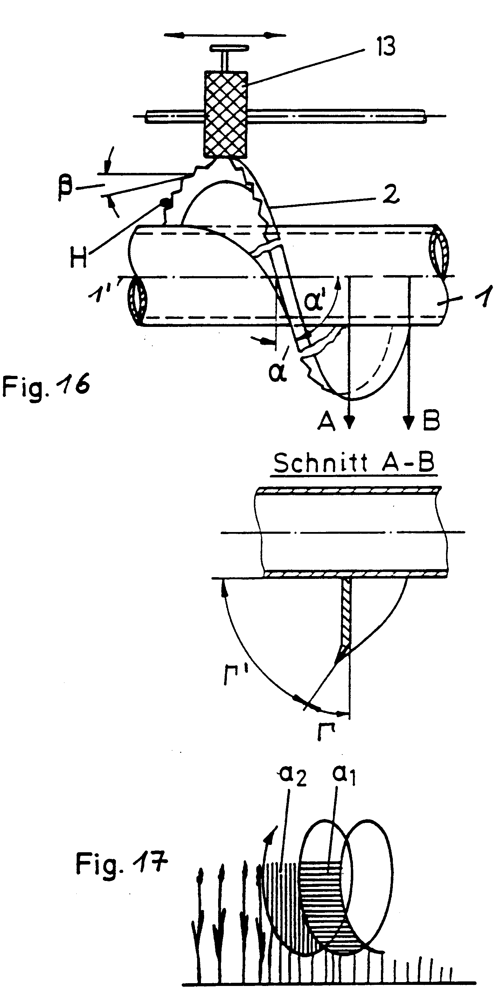

Diese ungünstigen Abhängigkeiten vermeidet die Erfindung: Fig. 16 zeigt in einer ähnlichen Darstellung wie Fig. 8 die im folgenden verwendeten Größen, nämlich die Steigung α der Schnecke (2), der Neigungswinkel β der im Schnitt wirksamen Zahnflanke und der Neigungswinkel Γ′ der Schneide gegenüber der Achse (1′) der Trommel bzw. Walze (1) bzw. den Winkel Γ= (90°-Γ′) (Schnitt A-B).

Die bereits besprochene Fig. 17 zeigt, daß entsprechend der mit der Fahrgeschwindigkeit fortschreitenden zykloidenförmigen Mähbahn das stehende Halmgut in kommaförmigen Sektionen a₁; a₂;.... abgeschlagen wird.

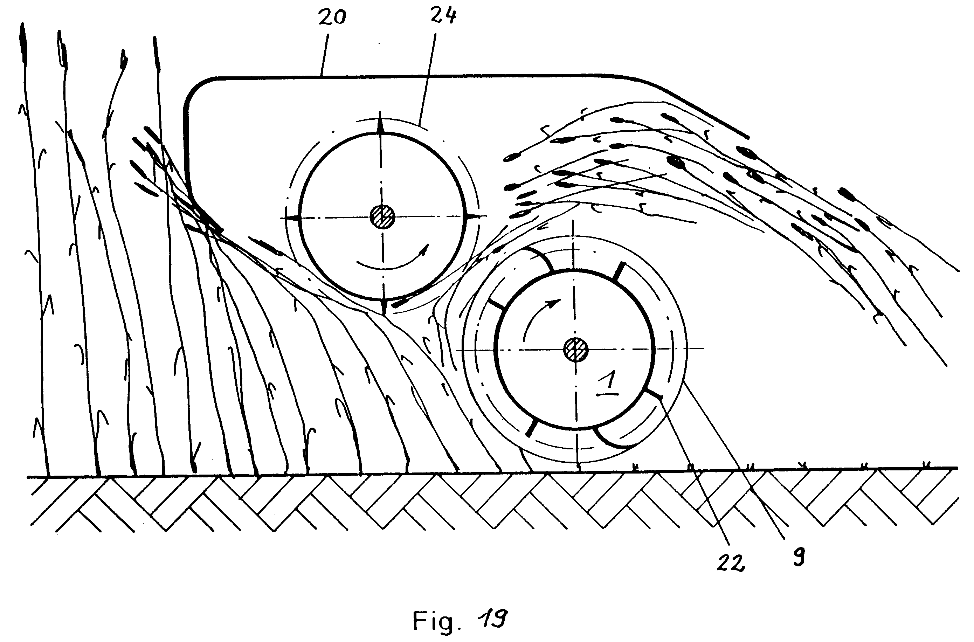

Fig. 18 zeigt als weiteres Ausführungsbeispiel der Erfindung einen Schneckenmäher, der eine Schneidschnecke (1), eine Haube (20) und ein direkt vor der Schnecke (1) angeordnetes Tuch (21) aufweist, das leicht auf den nach vorn geneigten Halmen (11) aufliegt. Das Tuch (21) ist an einer drehbar gelagerten Walze (21′) befestigt, so daß die "freie" Tuchlänge einstellbar ist.

Die geneigten Halme gelangen erst in Bodennähe in den Schneidkreis (9) der Mähschnecke (1), so daß ein Abköpfen von oben vermieden wird. Die nahe Anordnung zur Schneidwalze verhindert auch, daß gemähtes Gut gegen den stehenden Bestand geworfen wird, vielmehr wird es nach oben und hinten abgeworfen. Die Mitnehmerleisten (22) unterstützen das rasche Wegfördern des gemähten Gutes aus dem Schnittbereich.

Soll eine mechanische Aufbereitung des Gutes erfolgen, sind gezahnte Leisten (23) aufzusetzen. Auch ein wahlweises Schwenken der Leisten (22′) bis zum Anlegen an den Kern zur Dosierung der Intensität von Förderung bzw. Aufbereitung ist vorgesehen.

Fig. 19 zeigt eine Modifikation des Ausführungsbeispiels gemäß Fig. 18, bei dem das Tuch durch eine angetriebene Walze (24) ersetzt ist, die das Schnittgut aktiv aus dem Schneidbereich fördert.

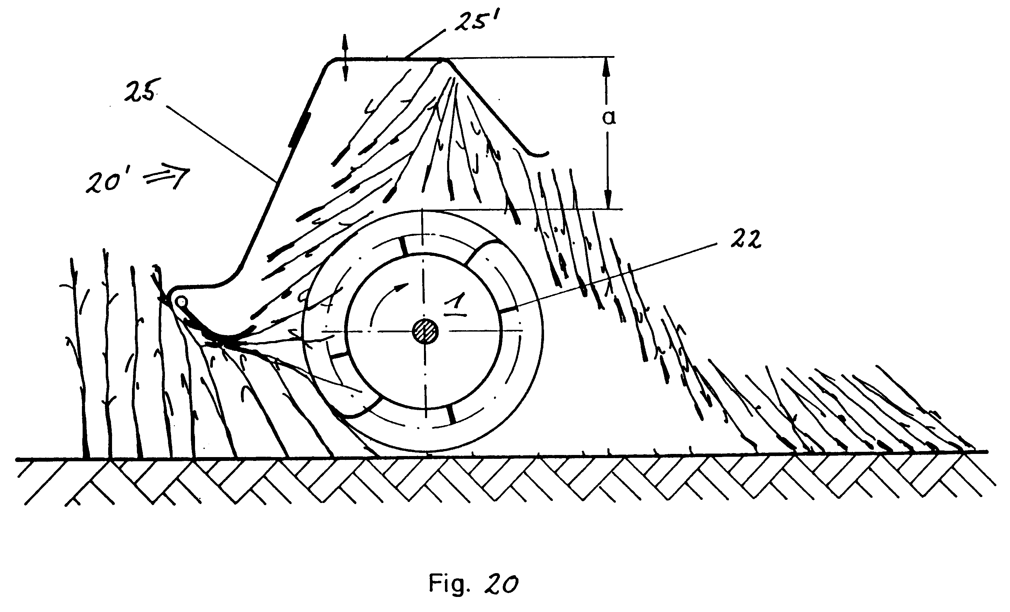

Fig. 20 zeigt eine weitere Modifikation des Ausführungsbeispiels gemäß Fig. 18, bei der über dem Schneckenmäher eine hochgezogene Haube (20′) angeordnet ist. Die vordere, schräg nach hinten aufsteigende Wand (25) liegt dabei im wesentlichen vor dem Schneckenmäher, so daß das gemähte Halmgut nahezu senkrecht nach oben abgeworfen wird. Es trifft gegen den oberen Boden (25′), dessen Abstand (a) zum Schneckenmäher einstellbar ist. Die Einstellhöhe (a) kann etwas geringer als die Halmlänge gehalten werden, so daß das obere Ende der Halme von der Mähtrommel (1) nach hinten bewegt wird; durch die abfallende hintere Wand der Haube (20′) kommt es zu einem Wendeeffekt; die Halmenden liegen dann im Schwad im wesentlichen oben. Je nach Höheneinstellung kann auch eine wirre Ablage oder eine Ablage mit den Ähren nach oben erreicht werden.

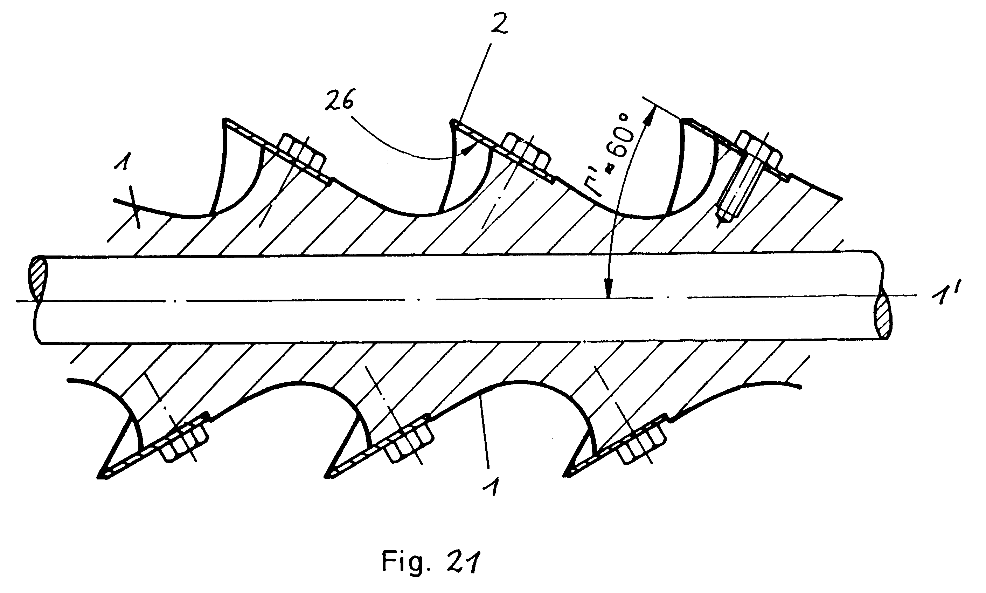

Die Figur 21 zeigt den Rotor eines Schneckenmähers, bei dem auf einem schneckenförmigen Grundkörper (1) eine dünne durchlaufende Schneide (2) aufgeschraubt ist, die zur Achse (1′) einen Winkel Γ′ ≈ 60° einschließt, so daß im Bereich (26) Erde und Halmgutreste nach außen abließen. Das Ablagern von Erde und Halmgutteilchen wurde schließlich zu einem solchen Aufbauen führen, daß die Schneidkante für den Schnitt keinen genügenden Freiraum mehr besitzt; ein Schneiden wird unmöglich.

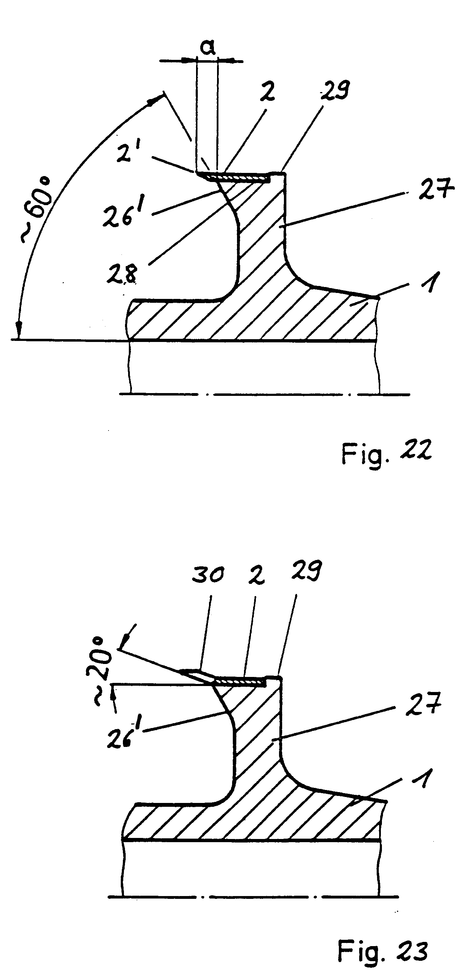

Die Figuren 22 und 23 zeigen weitere Ausführungen des in Fig. 21 dargestellten Rotors:

Der Grundkörper 1 besitzt einen schneckenförmigen Steg (27), der auf einer zylindrischen Mantelfläche (28) das (Schneid)-Band (2) trägt, das abgewickelt einen geraden Streifen darstellt (Fig. 22). Das Band (2) stützt sich gegen den Kragen (29) des Steges (27) ab und kann so eine axiale Schnittkomponente aufnehmen.

Die der Schnittseite zugewandte Flanke (26) des Steges (27) ist wiederum zur Achse (1′) um etwa 60° geneigt, so daß sich keine Erde oder Pflanzenteile aufbauen können. Die gegenüber der Schneidkante (2′) des Bandes (2) etwas zurückversetzte, geneigte Flanke (26) verhindert, daß im Moment des Schneidens die Halme durch die Flanke (26) zur Seite gedrückt werden. Der Überstand a des Schneidbandes (2) ist dem Stengeldurchmesser des zu mähenden Gutes anzupassen; er sollte größer sein als der Stengeldurchmesser damit der Halm beim Schneiden nicht auf die Flanke (26) aufläuft und zur Seite gedrückt wird.

In Fig. 23 ist die Schneide des Bandes (2) gezahnt. Die Flanke (26) des Steges (27) mündet am Grund der Zähne (28) aus. Die Zähne (28) sind leicht nach außen angestellt, so daß sie auf der Linie s-förmig geschliffen werden können. Das Neigen der Zahne kann bereits am losen, geraden Band erfolgen; es zeigt sich, daß bei im Verhältnis zum Schnekkendurchmesser kleinen Zähnen ein "sattes" Auflegen des Bandes auf dem Steg möglich ist.

## Patentansprüche

1. Walzenmäher mit einer um eine Drehachse drehbaren Walze, auf deren Mantel (1) eine gezahnte oder geriffelte Schneide (2) vorgesehen ist, die gegenüber der Senkrechten zur Drehachse um den Winkel Γ geneigt und als Schnecke ausgebildet ist, die eine Steigung (α) von kleiner als 30° aufweist und mit einer für den freien Schnitt erforderlichen Geschwindigkeit umläuft,
dadurch **gekennzeichnet**, daß die Schneiden der Zähne längs der effektiven Schnittlinie gegenüber der Drehachse entgegen der Drehrichtung um einen Winkel (β) von größer als 20° geneigt sind, und daß der Winkel Γ weniger als 30° beträgt.

2. Walzenmäher mit einer um eine Drehachse drehbaren Walze, auf deren Mantel (1) eine gewellte Schneide (2) vorgesehen ist, die gegenüber der Senkrechten zur Drehachse um einen Winkel Γ geneigt und als Schnecke ausgebildet ist, die eine Steigung (α) von kleiner als 30° aufweist und mit einer für den freien Schnitt erforderlichen Geschwindigkeit umläuft,
dadurch **gekennzeichnet**, daß die zur Drehachse geneigte Randzone eine wellenartige Profilierung mit etwa kreissegmentförmigem Querschnitt (16) trägt, daß der Winkel Γ weniger als 30° beträgt, und daß die Rundungen (16) der Profilierung mit einem Winkel Φ ≧ 90° zur Bewegungsrichtung auslaufen.

3. Walzenmäher nach einem der Ansprüche 1 bis 2,
dadurch **gekennzeichnet**, daß benachbarte Schneidelemente eine gleiche Steigungsrichtung aufweisen.

4. Walzenmäher nach einem der Ansprüche 1 bis 3,
dadurch **gekennzeichnet**, daß die Schneidelemente pendelnd aufgehängt sind.

5. Walzenmäher nach einem der Ansprüche 1 bis 3,
dadurch **gekennzeichnet**, daß die Schneidelemente Teller (5) sind, deren Randzone angeschärft ist, und die mit dem Abstand a angeordnet sind, und
daß die Teller (5) auf einer Welle (6) angeordnet sind, die zur Fahrtrichtung derart geneigt ist, daß sich die Mähzonen der einzelnen Teller in Fahrtrichtung gesehen überlappt.

6. Walzenmäher nach einem der Ansprüche 1 bis 5,
dadurch **gekennzeichnet**, daß den Mäher eine Gleitschiene (10) abstützt, deren Spitze bis zur Walzenmitte reicht, und daß zwischen der sich bei unterschlächtig drehender Walze und der Spitze der Gleitschiene ein Spalt c besteht.

7. Walzenmäher nach einem der Ansprüche 1 bis 6,
dadurch **gekennzeichnet**, daß auf der zur Drehachse geneigten inneren Fläche der Randzone der Schneide bzw. der Schneidelemente eine Verzahnung eingeschnitten oder eine zahnartige Riffelung eingeprägt ist.

8. Walzenmäher nach Anspruch 7,
dadurch **gekennzeichnet**, daß die Zähne (12) zur Drehachse (1') radial oder um den Winkel σ zur Drehrichtung nach vorne geneigt verlaufen.

9. Walzenmäher nach Anspruch 7 oder 8,
dadurch **gekennzeichnet**, daß die Zähne (12) mit der Schnittlinie b zur Drehachse (1') um den Winkel β geneigt sind.

10. Walzenmäher nach einem der Ansprüche 7 bis 9,
dadurch **gekennzeichnet**, daß die in die Randzone eingeschnitten oder eingeprägten Zähne (12) eine umlaufende Restdicke s des Schneidelements belassen.

11. Mäher nach einem der Ansprüche 1 bis 10,
dadurch **gekennzeichnet**, daß die zur Drehachse (1') geneigte innere zahnartig profilierte Fläche einsatzgehärtet oder mit verschleißfesten Stoffen, wie Nitraten, belegt ist.

12. Mäher nach einem der Ansprüche 1 bis 11,
dadurch **gekennzeichnet**, daß bis direkt vor den Mährotor reichend, ein Tuch (21) leicht auf dem noch stehenden Bestand mit in Fahrtrichtung geneigten Halmen (11) aufliegt.

13. Mäher nach Anspruch 12,
dadurch **gekennzeichnet**, daß das Tuch (21) an einer drehbar gelagerten Achse (21') befestigt ist.

14. Mäher nach einem der Ansprüche 1 bis 11,
dadurch **gekennzeichnet**, daß unmittelbar vor der Walze bzw. Trommel (Mährotor 1) eine angetriebene Walze (24) angeordnet ist.

15. Mäher nach einem der Ansprüche 1 bis 14,
dadurch **gekennzeichnet**, daß die Walze bzw. Trommel (1) zwischen den Schneckengängen (2) axial verlaufende, glatte oder gezahnte, feste oder schwenkbare Leisten (22) trägt.

16. Mäher nach einem der Ansprüche 1 bis 15,
dadurch **gekennzeichnet**, daß über dem Mährotor (1) eine Haube (20') angeordnet ist, deren vordere Wand (25) sich schräg nach oben erstreckt und im wesentlichen vor dem Mährotor liegt, deren oberer Boden (25') höhenverstellbar ist und deren hintere Wand nach unten abfällt.

17. Mäher nach einem der Ansprüche 1 bis 16,
dadurch **gekennzeichnet**, daß die Schneide als getrennter Streifen (2) auf einem schneckenförmigen Grundkörper (1 bzw. 27) austauschbar befestigt ist.

18. Mäher nach Anspruch 17,
dadurch **gekennzeichnet**, daß die Walze bzw. Trommel (1) einen schneckenförmigen Steg (27) mit einer zylindrischen Auflagefläche (28) für das Schneidband (2) trägt.

19. Mäher nach Anspruch 18,
dadurch **gekennzeichnet**, daß die dem Schnitt zugewandte Flanke (26') des schneckenförmigen Steges (27) zur Achse einen Winkel kleiner als 90° einschließt.

20. Mäher nach Anspruch 18 oder 19,
dadurch **gekennzeichnet**, daß das Band (2) gezahnt ist und so auf der zylindrischen Tragfläche (28) des Steges (27) aufliegt, daß die Flanke (26') des Steges (27) am Zahngrund ausmündet.

21. Mäher nach Anspruch 20,
dadurch **gekennzeichnet**, daß die Zähne (30) gegenüber der Auflagefläche (28) nach außen leicht abgeschränkt und in der Linie s durch einen hin- und herbewegten Stein bei laufender Walze schleifbar sind.

22. Mäher nach einem der Ansprüche 18 bis 21,
daß sich das Schneidband (2) gegen einen Kragen (29) des Steges (27) abstützt und von diesem überfaßt wird.

23. Mäher nach einem der Ansprüche 1 bis 22,
dadurch **gekennzeichnet**, daß zum Schärfen auf der Schneide (2) bei laufendem Rotor eine Schleifleiste oder ein sich hin und her bewegender Schleifstein federnd aufliegt.

## Claims

1. Spindle mower comprising a cylinder rotatable about an axis of rotation, on the jacket (1) whereof a toothed or fluted cutting blade (2) is provided which is inclined by the angle Γ relative to the normal on the axis of rotation and which is configured as a helical element having a pitch (α) smaller than 30° and rotating at a speed required for free cutting,
**characterized** in that the cutting edges of the teeth along the effective cutting line are inclined in opposition to the sense of rotation by an angle (β) wider than 20°, relative to said axis of rotation, and that said angle Γ is smaller than 30°.

2. Spindle mower comprising a cylinder rotatable about an axis of rotation, on the jacket (1) whereof an undulated cutting blade (2) is provided which is inclined by an angle Γ relative to the normal on the axis of rotation and which is configured as a helical element having a pitch (α) smaller than 30° and rotating at a speed required for free cutting,
**characterized** in that the marginal zone inclined relative to said axis of rotation carries a wave-like profile having a cross-sectional shape (16) corresponding approximately to a segment of a circle, that said angle Γ is smaller than 30°, and that the roundings (16) of said profile terminate at an angle φ ≧ 90° relative to the direction of movement.

3. Spindle mower according to any of Claims 1 to 2,
**characterized** in that adjacent cutting elements present an identical direction of pitch.

4. Spindle mower according to any of Claims 1 to 3,
**characterized** in that said cutting elements are suspended for oscillation.

5. Spindle mower according to any of Claims 1 to 3,
**characterized** in that said cutting elements are disks (5) having scarfed rim zones and disposed at a spacing (1), and that said disks (5) are disposed on an arbor (6) inclined, relative to the travelling direction, such that, seen in the travelling direction, the mowing zones of the individual disks overlap each other.

6. Spindle mower according to any of Claims 1 to 5,
**characterized** in that a sliding rail (10) supports the mower, whose tip extends up to the center of said cylinder, and that a gap (c) is provided between said cylinder, which rotates in an undershot manner, and the tip of said sliding rail.

7. Spindle mower according to any of Claims 1 to 6,
**characterized** in that a toothing is indented or a tooth-like fluting is impressed on the inner surface of the marginal zone of said cutting edge or said cutting elements, respectively, which is inclined relative to the axis of rotation.

8. Spindle mower according to Claim 7,
**characterized** in that the teeth (12) extend either radially, relative to said axis of rotation (1') or at a forward inclination at the angle σ, relative to the direction of rotation.

9. Spindle mower according to Claim 7 or 8,
**characterized** in that said teeth (12) with the cutting line (b) are inclined at the angle β relative to said axis of rotation(1').

10. Spindle mower according to any of Claims 7 to 9,
**characterized** in that said teeth (12), which are indented or impressed into the marginal zone, leave a peripheral residual thickness (s) of said cutting element.

11. Mower according to any of Claims 1 to 10,
**characterized** in that the inner surface having a tooth-like profile, which is inclined relative to said axis of rotation (1'), is case-hardened or plated with wear-resistant substances such as nitrates.

12. Mower according to any of Claims 1 to 11,
**characterized** in that a cloth (21) slightly rests on the still upright stock of stalks (11) bent in the travelling direction, which cloth extends up to a position directly in front of the mowing rotor.

13. Mower according to Claim 12,
**characterized** in that said cloth (21) is fastened on a rotatably supported arbor (21').

14. Mower according to any of Claims 1 to 11,
**characterized** in that a driven cylinder (24) is disposed immediately in front of said cylinder or rotor (mowing rotor 1).

15. Mower according to any of Claims 1 to 14,
**characterized** in that said cylinder or rotor (1) carries smooth or toothed, fixed or pivotable bars (22) which extend axially between the helical flights (2).

16. Mower according to any of Claims 1 to 15,
**characterized** in that a hood (20') is disposed above said mowing rotor (1), whose front wall (25) raises in an upward and forward direction and is disposed substantially in front of said mowing rotor, and whose upper plate (25') is vertically adjustable while its rear wall descends in a downward direction.

17. Mower according to any of Claims 1 to 16,
**characterized** in that said cutting edge is mounted as a separate band (2) for replacement on a helically shaped base body (1 or 27, respectively).

18. Mower according to Claim 17,
**characterized** in that said cylinder or rotor (1) carries a helically shaped bar (27) presenting a cylindrical surface (28) for supporting said cutting band (2).

19. Mower according to Claim 18,
**characterized** in that the flank (26') of said helically shaped bar (27), which faces the cut, is inclined relative to said axis at an angle smaller than 90°.

20. Mower according to Claim 18 or 19,
**characterized** in that said band (2) is toothed and rests on said cylindrical supporting surface (28) of said bar (27) in such a way that the flank (26') of said bar (27) terminates at the tooth gullet.

21. Mower according to Claim 20,
**characterized** in that said teeth (30) are set slightly outwardly relative to said supporting surface (28) and are adapted to be ground along the line (s) by a stone moved to and fro while said cylinder is running.

22. Mower according to any of Claims 18 to 21,
**characterized** in that said cutting band (2) is supported to bear against a collar (29) of said bar (27) and is covered by the latter.

23. Mower according to any of Claims 1 to 22,
**characterized** in that a grinding bar or a reciprocating grindstone rest resiliently on said cutting edge (2) for dressing with the rotor running.

## Revendications

1. Faucheuse hélicoïdale comprenant un cylindre rotatif autour d'un axe de rotation, sur la chemise (1), à un tranchant denté ou cannelé (2) qui est incliné a l'angle Γ relatif à la ligne orthogonale sur l'axe de rotation, et qui est configuré en tant qu'un élément hélicoïdal à un angle d'hélice (α) inférieur à 30°, qui tourne à une vitesse requise pour un coupage libre,
**caractérisée** en ce que les tranchants des dents le long de la ligne de coupe effective sont inclinés en opposition au sens de rotation, à un angle (β) plus grand que 20°, relatif audit axe de rotation, et en ce que ledit angle Γ est inférieur à 30°.

2. Faucheuse hélicoïdale comprenant un cylindre rotatif autour d'un axe de rotation, sur la chemise (1), à un tranchant ondulé (2) qui est incliné à un angle Γ relatif à la ligne orthogonal sur ledit axe de rotation, et qui est configuré sous forme d'un élément hélicoïdal à un angle d'hélice (α) inférieur à 30°, qui tourne à une vitesse requise pour un coupage libre,
**caractérisée** en ce que l'aire marginale, inclinée relativement audit axe de rotation, porte un profilage ondulé à une section transversale (16), qui corresponde environ à un secteur de cercle; en ce que ledit angle Γ est inférieur à 30°, et en ce que les courbures (16) dudit profilage se terminent à un angle φ ≧ 90° relativement au sens de mouvement.

3. Faucheuse hélicoïdale selon une quelconque des revendications 1 à 2,
**caractérisée** en ce que des éléments coupeurs voisins présentent un sens d'hélice identique.

4. Faucheuse hélicoïdale selon une quelconque des revendications 1 à 3,
**caractérisée** en ce que lesdits éléments coupeurs sont portés en palier oscillant.

5. Faucheuse hélicoïdale selon une quelconque des revendications 1 à 3,
**caractérisée** en ce que lesdits éléments coupeurs sont des disques (5) à des aires de bord affûtes, et sont disposés à un écart (1), et en ce
que lesdites disques (5) sont disposées sur un arbre (6) incliné relativement au sens de propulsion, de façon que, vue en sens de propulsion, les zones de fauchage des disques individuelles se chevauchent l'un l'autre.

6. Faucheuse hélicoïdale selon une quelconque des revendications 1 à 5,
**caractérisée** en ce qu'une glissière (10) sert à l'appui de la faucheuse, dont le bout extrême s'étend jusqu'au centre dudit cylindre, et en ce qu'un interstice (c) est prévu entre ledit cylindre, qui tourne de façon d'en dessous, et le bout extrême de ladite glissière.

7. Faucheuse hélicoïdale selon une quelconque des revendications 1 à 6,
**caractérisée** en ce qu'une denture est entaillée ou respectivement une cannelure dentiforme est produite par empreinte sur la face intérieure de ladite aire marginal dudit tranchant desdites éléments coupeurs, qui est inclinée relativement à l'axe de rotation.

8. Faucheuse hélicoïdale selon la revendication 7,
**caractérisée** en ce que les dents (12) s'étendent soit en sens radial relatif audit axe de rotation (1') ou en biais avant a l'angle σ, par rapport au sens de rotation.

9. Faucheuse hélicoïdale selon la revendication 7 ou 8,
**caractérisée** en ce que lesdites dents (12) avec la ligne de coupe (b) sont inclinées à l'angle β relatif audit axe de rotation (1').

10. Faucheuse hélicoïdale selon une quelconque des revendication 7 à 9,
**caractérisée** en ce que lesdites dents (12), qui sont entaillées ou produite par empreinte dans l'aire marginale, laissent une épaisseur périphérique résiduelle (s) dudit élément coupeur.

11. Faucheuse selon une quelconque des revendications 1 à 10,
**caractérisée** en ce que la face intérieure a profilage dentiforme, qui se trouve en biais relativement audit axe de rotation (1'), est cémentée ou prévue d'une couche y vaporisée en des substances résistantes à l'usure, comme en nitrates.

12. Faucheuse selon une quelconque des revendications 1 à 11,
**caractérisée** en ce qu'un drap (21) repose légèrement sur le volume des tiges d'herbe encore debout (11), qui sont pliées en sens de propulsion, lequel drap s'étend jusqu'à une position directement devant le rotor faucheur.

13. Faucheuse selon la revendication 12,
**caractérisée** en ce que ledit drap (21) est fixé sur un arbre logé dans un palier rotatif (21').

14. Faucheuse selon une quelconque des revendications 1 à 11,
**caractérisée** en ce qu'un cylindre entraîné (24) est disposé directement devant ledit cylindre ou rotor (rotor faucheur 1).

15. Faucheuse selon une quelconque des revendications 1 à 14,
**caractérisée** en ce que ledit cylindre ou rotor (1) porte des barrettes lisses ou dentées, fixées ou pivotables (22), qui s'étendent en sens axial entre les spires hélicoïdales (2).

16. Faucheuse selon une quelconque des revendications 1 à 15,
**caractérisée** en ce qu'un capot (20') est disposé au dessus dudit rotor faucheur (1), dont la paroi avant (25) monte en haut et vers l'avant, en étant disposée essentiellement devant ledit rotor faucheur, et dont la plaque supérieure (25') est ajustable en hauteur, pendant que sa paroi arrière descend en bas.

17. Faucheuse selon une quelconque des revendications 1 à 16,
**caractérisée** en ce que ledit tranchant est monté sous forme d'un ruban séparé (2) à remplacer, sur un corps de base (1 ou respectivement 27) à forme hélicoïdale.

18. Faucheuse selon la revendication 17,
**caractérisée** en ce que ledit cylindre ou rotor (1) porte une barrette (27) à forme hélicoïdale, qui a une surface cylindrique (28) qui sert à l'appui dudit tranchant en ruban (2).

19. Faucheuse selon la revendication 18,
**caractérisée** en ce que la face (26') de ladite barrette à forme hélicoïdale (27), qui se trouve en face de la coupe, est inclinée relativement audit axe à un angle inférieur à 90°.

20. Faucheuse selon la revendication 18 ou 19,
**caractérisée** en ce que ledit ruban (2) est denté et repose sur ladite surface d'appui cylindrique (28) de ladite barrette (27), de façon que ladite face (26') de ladite barrette (27) se termine au fond de dent.

21. Faucheuse selon la revendication 20,
**caractérisée** en ce que lesdites dents (30) sont serrées légèrement vers l'extérieur, relativement à ladite surface d'appui (28), en étant apte d'être rectifiées le long de la ligne (s) moyennant un affiloir passé de va-et-vient, pendant que le cylindre tourne.

22. Faucheuse selon une quelconque des revendications 18 à 21,
**caractérisée** en ce que ledit tranchant en ruban (2) se trouve en appui de façon à presser contre un collet (29) de ladite barrette (27), en étant recouvert par la dernière.

23. Faucheuse selon une quelconque des revendications 1 à 22,
**caractérisée** en ce qu'une barrette rectifieuse ou un affiloir à mouvement de va-et-vient repose sur ledit tranchant (2) pour une rectification à rotor tournant.
